# EUROPEAN PATENT SPECIFICATION

(11) **EP 3 054 193 B1**
(45) Date of publication and mention of the grant of the patent: **27.11.2019**
(21) Application number: 15201951.9
(22) Date of filing: 22.12.2015
(51) Int. Cl.: F16H 25/24

(54) **A GASKET FOR RECIRCULATING BALL SCREW ACTUATORS**
DICHTRING FÜR KUGELSPINDEL AKTUATOREN
JOINT D'ÉTANCHÉITÉ POUR DES ACTIONNEURS À VIS À BILLES

(30) Priority: 09.02.2015 IT MI20150173
(43) Date of publication of application: 10.08.2016
(73) Proprietor: A.T.P. S.p.A., 41100 Modena (IT)
(72) Inventor: ZACCHE', Vanni, 41100 Modena (IT)
(74) Representative: Long, Giorgio

(56) References cited:
- GB-A- 2 218 757
- GB-A- 2 290 594
- US-A- 4 052 076
- US-A1- 2006 076 214
- US-A1- 2015 233 457

## Description

The present invention relates to a gasket for actuators of recirculating ball screw type, of the type used for example in the aeronautical industry, for actuating the carriages, flaps or other moving components.

Traditional actuators with recirculating ball screw comprise a screw and a screw nut, each having a coil-shaped groove and rotatably connected by means of balls which allow a reciprocal rotary-translational movement between screw and screw nut. Moreover, traditional actuators comprise one or more gaskets made of plastic material (generally PTFE) serving the function of ensuring an effective lubrication of the rolling zone of the balls by retaining the lubricant within the screw nut and avoiding the foreign bodies or contaminants present in the external environment (sand, dust, saline mist, ice) from entering, thus ensuring the proper operation of the actuator and increasing the useful life thereof.

Gaskets of traditional type are ring-shaped with a seal on the thread and on the outer diameter of the screw, with suitable interference values. In particular, the sealing ring internally has a projection or recess which extends on a coil-shaped profile to be coupled to the outer coil-shaped groove of the screw.

US2006/076214 discloses the preamble of claim 1.

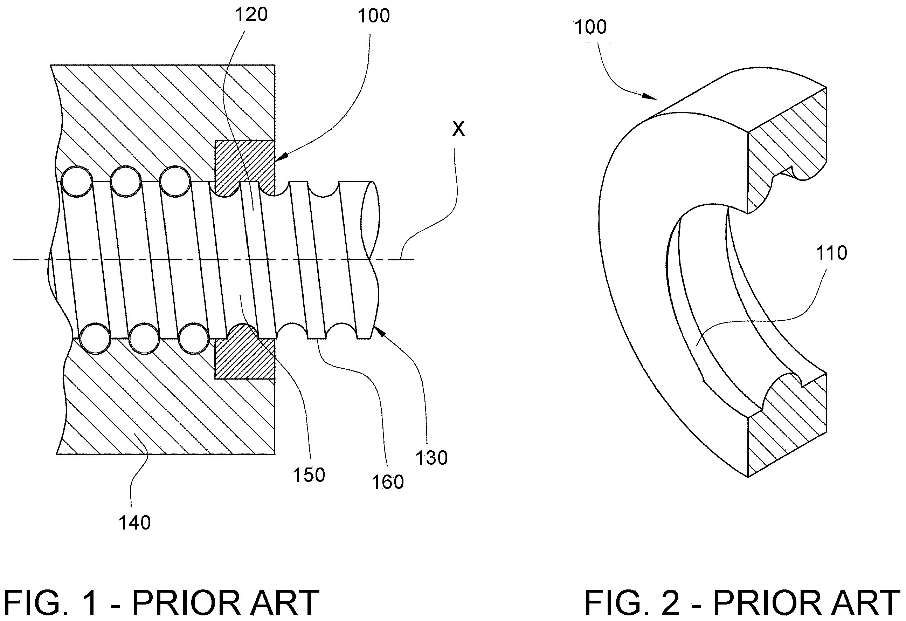

An example of a known-type gasket is depicted in figures 1 and 2. Such a gasket 100 is ring-shaped and is internally provided with a coil-shaped recess 110, which is substantially counter-shaped with respect to the coil-shaped profile of the outer rib 120 of screw 130 in order to provide a seal on the outer rib 120 of screw 130. Gasket 100 is rotationally integral with the screw nut 140 and, upon the reciprocal rotation between screw 130 and screw nut 140, the outer coil-shaped rib 120 of screw 130 slides against the inner coil-shaped profile 110 of gasket 100, thus determining a sealing action between the interior and the exterior of the actuator.

In particular, in the field of recirculating ball screws for aeronautical and industrial applications, the functionality of the gaskets is required under extreme temperature and external agent contamination conditions.

Operating temperatures range from -60°C to +100°C, and in addition the exposure to the aforesaid contaminants is to be considered, which contaminants can compromise the proper operation of the actuator.

In consideration of the aforesaid factors, traditional gaskets have certain significant limitations.

The difference in the thermal expansion coefficients between the steel of the screw and the plastic material used to make the gasket (which ratio is generally equal to 1:10) combined with the geometry of the gasket-screw coupling causes, in the range of the operating temperatures, the different thermal expansions/contractions of the materials in contact to generate:
- at low operating temperatures, an increase in the radial interference between gasket and screw with respect to the design value imposed at ambient temperature, with the subsequent need to oversize the engines dedicated to moving the actuator; moreover, at low temperatures, the generation of interference in the longitudinal (axial) direction between screw and gasket is apparent, and the greater is the screw pitch, the greater is such an interference, since the gasket-screw contact inside the thread makes the gasket-screw system dependent on longitudinal elongations and contractions;
- at high operating temperatures, a decrease in the radial interference between gasket and screw with respect to the design value imposed at ambient temperature, and an increase in the interference in the longitudinal direction between gasket and screw.

The aforesaid differences in the thermal deformation between gasket and screw can compromise the seal of the gasket, with the subsequent possibility of contamination of the ball rolling zone inside the screw nut, loss of the lubricant arranged during the assembly operation, and substantial decrease in the functionality and life of the actuator. Moreover, an increase in the engine torque is required due to the increase in the resistant torque caused by the excessive interference in the longitudinal and radial direction between gasket and screw.

The above-described negative effects are also increasingly apparent due to the fact that traditional gaskets have a consistent thickness measured in the radial direction (the ratio between inner diameter and outer diameter of the gasket normally ranges from 0.75 to 0.83) and therefore have a high radial rigidity. This results in high values of the pressure exerted by the gasket on the screw when it is keyed by interference thereon. In particular, the differences in the thermal deformation between gasket and screw imply harmful interferences both in the axial direction and in the radial direction, with subsequent high axial and radial tightening efforts and high energy dissipation and wear of the components, with the effect of a reduction of the useful life of the gasket.

Within this context, the technical task underlying the present invention is to suggest a gasket for actuators of recirculating ball screw type, which overcomes the above-mentioned drawbacks of the known art.

In particular, it is the object of the present invention to provide a gasket for actuators of recirculating ball screw type capable of ensuring an increased seal for a wide range of operating temperatures, especially in the case of significant thermal stresses (aeronautical applications).

It is a further object of the present invention to provide a gasket for actuators of recirculating ball screw type having an increased useful life and, in particular, capable of dissipating the lowest mechanical power possible within the entire broad range of operating temperatures mentioned above.

The technical task explained and the objects specified are substantially achieved by a gasket for actuators of recirculating ball screw type comprising the technical features set forth in one or more of the appended claims.

Further features and advantages of the present invention will become more apparent from the explanatory, and therefore non-limiting, description of a preferred, but not exclusive, embodiment of a gasket for actuators of recirculating ball screw type, as shown in the accompanying drawings, in which:
- figure 1 is a sectional view of a portion of an actuator with recirculating ball screw, equipped with a sealing gasket in accordance with the known art;
- figure 2 is a sectional perspective view, according to a radial sectional plane, of the gasket according to the known art in figure 1;
- figure 3 is an exploded perspective view of a gasket in accordance with the present invention;
- figure 4 is an exploded view, according to a radial sectional plane, of the gasket in figure 3;
- figure 5 is a perspective view of the gasket in figure 3, in an assembled configuration;
- figure 6 is a perspective view of the gasket in figure 5, according to a different observation point;
- figure 7 is a sectional view of a portion of an actuator with recirculating ball screw, equipped with a gasket in accordance with the present invention.

With reference to figures from 3 to 7, numeral 1 generally indicates a gasket according to the present invention.

Gasket 1 is preferably suitable for being applied to an actuator with recirculating ball screw, and in particular externally applied to the screw 130 of the actuator to ensure an effective lubrication of the rolling zone of the balls by retaining the lubricant within the screw nut and avoiding the foreign bodies present in the external environment from entering, thus ensuring the proper operation of the screw and increasing the useful life thereof.

Gasket 1 comprises a first ring 2, or outer ring, and a second ring 3, or inner ring.

The outer ring 2 can be stably inserted into a recess obtained in a support portion 4, for example a portion of the screw nut of the actuator.

To this end, the outer surface 2a of the outer ring 2 can be engaged with the aforesaid hole of the support portion 4 to retain the outer ring 2 in said recess without possibility of rotation within the hole itself. This can be obtained by stably securing the outer ring 2 to the screw nut by means of known systems.

For example, as shown in the figures, the outer ring 2 can comprise one or more teeth 20 on the outer surface 2a thereof, which are intended to be inserted into specific seats 21 arranged on the inner surface of the screw nut 4.

Similarly, the inner surface 3a of the inner ring 3 can be engaged, preferably by interference, with the outer surface of the screw 130 of the actuator. In particular, screw 130 has an outer coil-shaped rib 120 defining a corresponding coil-shaped groove 150 which extends about the rotation axis "X" of screw 130. The inner surface 3a of the inner ring 3 is adapted to be fitted, preferably by interference, on the crests 160 of the aforesaid outer coil-shaped rib 120 of screw 130.

In certain embodiments, the outer ring 2 is made of a thermoplastic resin, e.g. an acetal resin such as EKOGLIS®-S-AL.

In certain embodiments, the inner ring 3 is made of a polyurethane elastomer, e.g. of SINTEK®-H-TPU LT.

The outer ring 2 has a through hole 5 obtained in the radial direction, i.e. obtained at the aforesaid outer surface, to put the outer surface 2a of the outer ring 2 in communication with a space portion delimited by the outer ring 2. In other words, the through hole 5 develops about an axis which is transverse, preferably perpendicular and even more preferably incident, to the aforesaid axis "X".

Similarly, the inner ring 3 has a through hole 6 obtained in the radial direction.

The two rings 2, 3 are preferably axisymmetric in shape (unless the aforesaid through holes 5, 6) about respective axes intended to coincide with the aforesaid axis "X" when mounted on screw 130.

The inner ring 3 can be axially inserted into the outer ring 2 and can be stably hooked thereto by means of an outer radial projection 7, preferably annular in shape, of the inner ring 3, which is engaged in an inner annular recess 8 of the outer ring 2. Therefore, preferably, the coupling between the outer ring 2 and the inner ring 3 is a snap-coupling in the axial direction.

The two rings 2, 3 are advantageously shaped so as to allow, once the coupling has occurred, a freedom of thermal deformation of the inner ring 3 with respect to the outer ring 2, both in the axial direction and in the radial direction. For example, this is obtained by providing a specific distance in the radial direction between the two rings 2, 3 and by providing the coupling between the two rings 2, 3 only at the aforesaid outer radial projection 7 and at the inner annular recess 8. This makes the inner ring 3 free to be elastically deformed both in the axial direction and in the radial direction without being obstructed by the outer ring 2.

In other words, the inner ring 3 and the outer ring 2 are not restrained to each other in the radial expansion/contraction.

Moreover, once the insertion has occurred, the two through holes 5, 6 are aligned and coaxial to each other and can be crossed by a pin 9. Pin 9, which is inserted into the two through holes 5, 6, protrudes toward a middle portion of the two rings 2, 3 so as to intercept a portion of the coil-shaped groove 150 of screw 130 once the rings 2, 3 have been mounted.

Pin 9 advantageously defines a sealing member which is active inside the outer coil-shaped groove 150 of screw 130 to achieve a sealing separation between two portions of the aforesaid coil-shaped groove 150 arranged on opposite sides of pin 9. In other words, the outer coil-shaped groove 150 of screw 130 is divided by pin 9 into two distinct half-grooves, which originate at pin 9 and depart in opposite directions, each being sealingly separated from the other.

Since the inner surface 3a of the inner ring 3 comes in contact with the crests 160 of the aforesaid coil-shaped rib 120 of screw 130, it is apparent that pin 9 cooperates at least with the inner ring 3 (but also with the outer ring 2 and with the rib 120 itself) to obtain a sealing separation between two space portions arranged on opposite sides of gasket 1 (in particular, one arranged inside the actuator and one outside the actuator).

In certain embodiments, pin 9 is made of a polyurethane elastomer, e.g. of SINTEK®-H-TPU.

In greater detail, pin 9 is shaped like a pivot or dowel, suitable for being inserted into the aforesaid through holes 5, 6, which preferably have circular section.

Pin 9 has a dimension, measured along the direction of insertion into the aforesaid through holes 5, 6, which is greater than the corresponding thickness of the outer 2 and inner 3 rings, in order to allow pin 9 to have a front portion 9a which protrudes inside the two rings 2, 3 (toward axis "X") and a slightly protruding rear portion 9b with respect to the outer surface 2a of the outer ring 2. Thereby, pin 9 is kept in position by means of the compression exerted by the outer coil-shaped groove 150 of screw 130 at the front portion 9a thereof, and by the support portion 4 at the rear portion 9b thereof.

The front portion 9a of pin 9 is advantageously substantially counter-shaped with respect to the shape of the coil-shaped groove 150 of screw 130, in order to copy such a shape and obtain an effective sealing action on screw 130.

Moreover, pin 9 can have a through opening 10, which extends along the direction of insertion of pin 9 into the through holes 5, 6 (and which thus extends from the first portion 9a to the second portion 9b of pin 9) to allow an increased compression deformability of pin 9 with respect to a solid pin. In fact, pin 9 can be accommodated by interference in the through holes 5, 6. Therefore, the through opening 10 of pin 9 allows an easier mounting of pin 9, thus providing the pin 9 itself with increased elasticity, and moreover it leaves increased freedom to the axial and radial expansions/contractions during the operation of the gasket at the different operating temperatures.

To the same end, pin 9 has an annular groove 22 close to the rear portion 9b, which is adapted to determine increased axial compliance for both the dilatometric and preloading compensations.

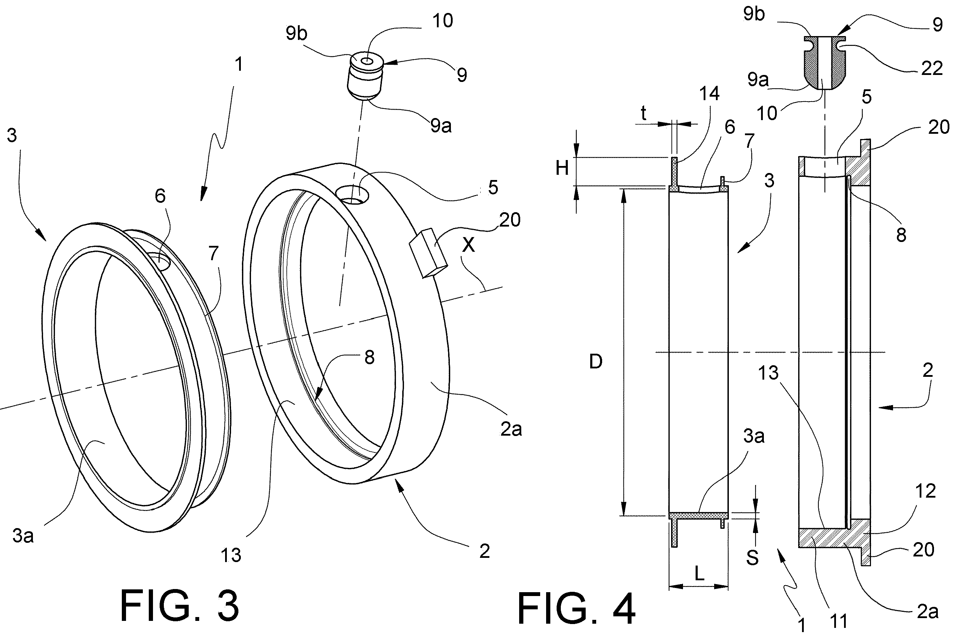

Figures 3 and 4 show the shape of the two rings 2, 3 in detail.

In particular, the outer ring 2 has an outer circular-section shape which is substantially cylindrical. In greater detail, the outer ring 2 has a first portion 11 having the aforesaid through hole 5, the first portion 11 being adapted to face the interior of the actuator, and a second portion 12 axially placed by the side of the first portion 11 and adapted to face the exterior of the screw nut.

The aforesaid second portion 12 of the outer ring 2 has an inner surface 13 facing screw 130 and preferably having a greater diameter than the inner surface 3a of the inner ring 3, which is preferably intended to be engaged, by interference, in contact with the crests 160 of screw 130.

The aforesaid annular recess 8 is provided between the aforesaid first and second portions 11, 12 of the outer ring 2.

The inner ring 3 instead has an inner circular-section shape which is substantially cylindrical to adapt to the crests 160 of screw 130, and has the aforesaid through hole 6 in a preferably axially centered position.

The aforesaid outer radial projection 7, preferably having an axisymmetric outer profile about axis "X", is obtained close to a first edge of the inner ring 3.

In certain embodiments, a radial protrusion 14 is obtained close to the second edge of the inner ring 3, which radial protrusion 14 preferably develops like a continuous annular surface and defines a shoulder which can abut against the aforesaid first portion 11 of the outer ring 2.

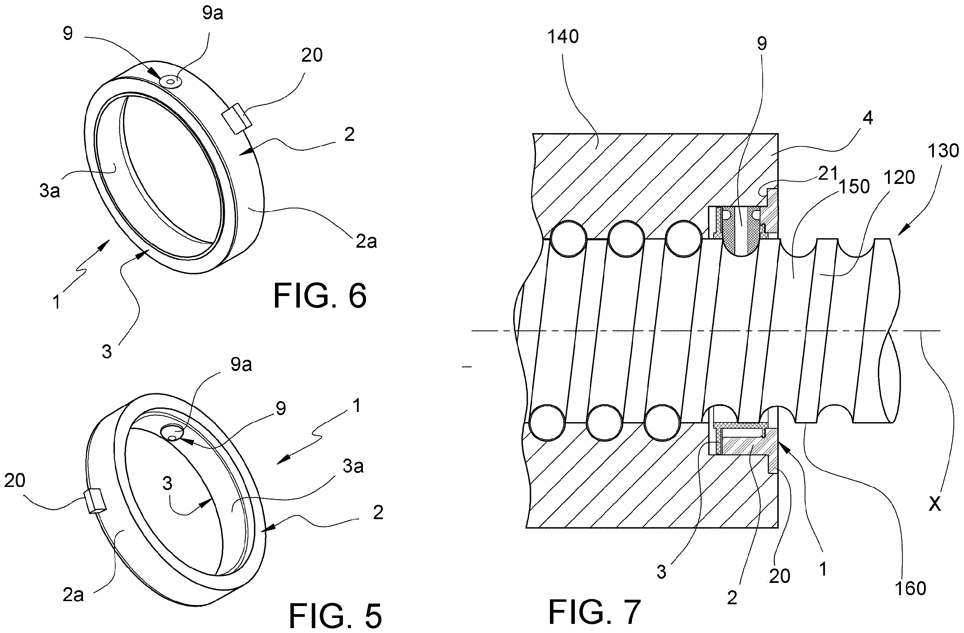

In assembled position (figures 5 and 6), the two through holes 5, 6 are mutually aligned and overlapped, and pin 9 is inserted through the through holes 5, 6, thus protruding inside the two rings 2, 2 to abut against the interior of the coil-shaped groove 150 of screw 130.

The outer radial projection 7 of the inner ring 3 is also stably connected in the annular recess 8, for example by means of pressure and/or snap coupling. The radial protrusion 14 of the inner ring 3 is further stably kept in abutment against the outer ring 2.

Therefore, the coupling between the two rings 2, 3 is obtained by means of the coupling between the outer radial projection 7 of the inner ring 3 and the annular recess 8 of the outer ring 2.

The radial protrusion 14 preferably has an outer diameter which is greater than the outer diameter of the outer ring 2. Therefore, the radial protrusion 14 can be engaged by interference inside the recess of the screw nut to obtain a sealing action inside said recess. Such a sealing action adds to the seal exerted on the crests 160 by the inner surface 3a of the inner ring 3 to obtain a complete seal between screw 130 and screw nut.

Figure 7 shows the operating position of gasket 1, in which the front portion 9a of pin 9 is stably inserted by interference into the outer coil-shaped groove 150 of screw 130, and in which the inner surface 3a of the inner ring 3 is preferably positioned by interference on the crest 160 of the outer coil-shaped rib 120 of screw 130.

In the above-described structure of gasket 1, the outer ring 2 defines a substantially rigid support adapted to hold in place and keep the remaining components of gasket 1 coupled to the support portion 4. The inner ring 3 instead defines a sealing clamp, which can be deformed both in the radial direction and in the axial direction, to obtain a seal on the crests 160 of screw 130.

Pin 9 can also be deformed and provides the true sealing separation inside the coil-shaped groove 150 of screw 130.

In accordance with one embodiment, the inner ring 3 has an average diameter "D" equal to about 44 mm, measured at the centerline of the portion involved by the through hole 6 (therefore between the radial protrusion 14 and the outer radial projection 7), and a radial thickness "s" (measured at the same portion) ranging from 0.5 to 2 mm, and preferably equal to about 1 mm.

Moreover, the inner ring 3 advantageously has an axial dimension "L" (which depends on the pitch of the recirculating ball screw) such as to be in contact with a crest portion 160 of screw 130 defined by a complete revolution of the coil-shaped rib 120 about axis "X". Such an axial dimension "L" is preferably between 5 and 15 mm, and even more preferably equal to about 9 mm.

Furthermore, the radial protrusion 14 has a height "H" (measured in the radial direction) ranging from 4 to 10 mm, preferably of about 7 mm, and a thickness "t" ranging from 0.5 to 1.5 mm, preferably of about 1 mm.

The assembly of gasket 1 can be achieved by axially nearing the two rings 2, 3 to each other to determine a stable coupling thereof, in particular by connecting the radial projection 7 of the inner ring 2 in the annular recess 8 of the outer ring, thus causing the two through holes 5, 6 of the two rings to be mutually aligned and overlapped, and then inserting pin 9 into the aforesaid aligned holes 5, 6. The application of pin 9 can be carried out once the two rings 2, 3, already coupled to each other or before they are coupled, have already been fitted onto screw 130.

In accordance with a first variant (not shown), the two rings 2, 3 are replaced by a single ring having a through hole for inserting pin 9 substantially as described above. In certain embodiments, such a ring is made of a polyurethane elastomer, e.g. of SINTEK®-H-TPU LT.

In accordance with a second variant (not shown), pin 9 can be defined by an inner protrusion of the inner ring 3, that is in one piece with the inner ring 3. Such a protrusion can be engaged within the coil-shaped groove 150 of screw 130 in order to define the aforesaid sealing separation between the interior and the exterior of the actuator.

In all the embodiments disclosed, all the components of gasket 1 remain stationary (i.e. in fixed position) during the operation of the actuator. In particular, the law of motion followed by screw 130 is such as to allow the outer coil-shaped groove 150 of screw 130 to slide in contact with pin 9 (fixed), while maintaining a proper coupling between screw 130 and pin 9.

The solution described achieves the intended objects, while overcoming the drawbacks of the known art.

The particular geometry of the gasket (thin sealing clamp and pin in contact with the coil-shaped groove of the screw) makes the relative elongations and contractions, due to the thermal expansion, in the longitudinal direction between screw and gasket harmless, and in particular, causes them not to damage the seal and the proper operation of the actuator.

The pin comes in contact with the coil-shaped groove of the screw along a coil-shaped line which follows the groove itself (specifically on a hertzian contact ellipsoid centered on the line), and this ensures that there is no increase in the axial interference, and therefore in the resistant torque due to the gasket, as the temperature varies in the operating range.

The sealing clamp (inner ring) is free to perform elongations or contractions with respect to the screw in the axial and radial direction, and this ensures that no axial or radial interference is generated between the components in contact.

Moreover, the particular geometry of the inner ring (sealing clamp) distinctly consists of thin portions with high slenderness, capable of maintaining an effective sealing action and the deformation of which implies very low dissipations. The presence of the outer ring allows an optimal support of the inner ring and does not obstruct the thermal deformations of the inner ring.

In particular, the value of the ratio of inner diameter to outer diameter of the sealing clamp (measured at the aforesaid portion to which the thickness "s" refers) is close to 1 (preferred values ranging from 0.96 to 0.98); this results in the resistance to the rotation of the screw exerted by the clamping action of the gasket being less than the resistance generated by traditional gaskets, the radial interference between screw and gasket (due to the differences in the ambient temperature) being equal. In particular, with respect to traditional gaskets, the variations of the aforesaid resistant action are very small as the operating temperature varies, and therefore they can be increasingly controlled and reduced during the design step.

From tests performed by the Applicant, the following emerges:
- at a temperature of -60°C, the resistant torque due to the gasket is 30-40% greater with respect to the resistant torque at ambient temperature;
- at a temperature of 100°C, the increase in resistant torque due to the gasket ranges from 0 to +10% with respect to the resistant torque value at ambient temperature.

The above is to be compared with considerably more unfavorable results obtained by traditional gaskets (figures 1 and 2), for which the resistant torque at an external temperature of -60°C is 5-7 times greater than the resistant torque at ambient temperature.

In addition to the aforementioned advantages, the gasket in accordance with the present invention further ensures an efficient sealing separation between interior and exterior by minimizing the contact surface between gasket and screw with respect to standard gaskets. Therefore, the gasket according to the invention involves lower resistant torques with respect to traditional gaskets, the materials used being equal.

In view of the considerations above, the presence of the pin and the construction of the gasket in two parts (outer ring and inner ring) cooperate to reduce the resistance to rotation of the screw due to the different thermal expansions/contractions between screw and gasket.

Moreover, the pin is in contact with the thread of the screw and prevents the contaminants from entering in the rolling zone of the balls. Pin and sealing clamp ensure the seal of the gasket, with a reduced axial volume with respect to traditional gaskets.

The outer (support) ring ensures the proper radial and axial positioning of the other components of the gasket (clamp and pin). It primarily serves the function of positioning, but it also allows the thermal expansions of sealing clamp and pin while keeping them released from each other.

It is apparent that only certain particular embodiments of the present invention have been described, to which those skilled in the art can make those modifications required for adapting it to particular applications, without however departing from the scope of protection of the present invention.

## Claims

1. A gasket for actuators of recirculating ball screw type, comprising:
- a first portion (2) which can be engaged to a support portion (4) of the actuator, preferably a screw nut;
- a second portion (3, 9) which can be engaged to an outer threaded portion (120, 150) of a screw (130) of the actuator to define, in cooperation with at least said screw (130) and/or with said support portion (4), a sealing separation between two space portions arranged on opposite sides of said gasket (1);
**characterized in that** said first portion comprises a first member (2) extending about an axis (X), and **in that** said second portion comprises a second member (3) concentric to and distinct from said first member (2) and which can be coupled to said first member (2), said second member (3) being axially and radially deformable with respect to said first member (2),
**characterised in that**
said gasket (1) comprises a sealing member (9) protruding towards said axis (X), said sealing member (9) being at least partially deformable and substantially counter-shaped to an outer coil-shaped groove (150) of said screw (130) to interference couple externally to said screw (130) and to obtain said sealing separation, said sealing member (9) being pin-shaped and of a substantially cylindrical shape.

2. The gasket according to claim 1, wherein said first member (2) comprises a preferably rigid outer ring (2), and wherein said second member (3) comprises an inner ring (3) in a flexible material, which can be stably coupled to said outer ring (2) and at least partially counter-shaped to an outer thread of said screw to interference couple externally to said screw and to obtain said sealing separation.

3. The gasket according to claim 1 or 2, wherein said first member (2) is made of a thermoplastic resin, or an acetal and wherein said second member is at least partially made of a polyurethane elastomer.

4. The gasket according to claim 1, wherein said sealing member (9) is defined by a pin (9) stably applicable to the outer ring (2) and extending away from the inner ring (3) in the direction of said axis (X).

5. The gasket according to claim 4, wherein each of said rings (2, 3) has a respective through hole (5, 6) obtained in the radial direction and in which said pin (9) can be stably housed, said gasket (1) comprising stable coupling means (7, 8) active between the outer ring (2) and the inner ring (3) to keep said rings (2, 3) stably coupled in such a position as to mutually overlap said through holes (5, 6) to allow said pin (9) to be inserted into the through holes (5, 6).

6. The gasket according to claim 4 or 5, wherein said inner ring (3) has an inner surface (3a) which can be made to abut against an outer surface of said screw (130), and wherein said outer ring (2) has a first portion (11) comprising said through hole (5) and a second portion (12) axially spaced apart with respect to said first portion (11).

7. A recirculating ball screw actuator comprising a gasket (1) according to any of the preceding claims, wherein said actuator has a support portion (4), preferably a screw nut, to which said first member (2) of the gasket (1) is stably secured, and a screw (130) rotatably connected to the support portion (4) by a recirculating ball mechanism to follow a rotary-translational motion with respect to the support portion (4), said second member (3) being coupled to the outer coil-shaped thread of said screw (130) by interference to obtain a sealing separation between a first space portion within the actuator and a second space portion arranged on the opposite side of the first space portion with respect to said gasket (1).

8. The actuator according to claim 7, wherein said second member (3) of the gasket (1) extends between said support portion (4) of the actuator and said outer coil-shaped thread of said screw (130) to obtain a sealing action on both said support portion (4) and said screw (130), and wherein said first member (2) has a radial extent, as measured between said support portion (4) and said screw (130), which is less than said second member (3).

## Patentansprüche

1. Dichtung für Aktuatoren vom Kugelumlaufspindel-Typ, umfassend:
- einen ersten Abschnitt (2), welcher mit einem Trageabschnitt (4) des Aktuators, vorzugsweise einer Schraubenmutter, eingegriffen werden kann;
- einen zweiten Abschnitt (3, 9), welcher mit einem äußeren Gewindeabschnitt (120, 150) einer Schraube (130) des Aktuators eingegriffen werden kann, um in Zusammenwirkung mit wenigstens der Schraube (130) und/oder mit dem Trageabschnitt (4) eine Dichtungstrennung zwischen zwei Raumabschnitten zu definieren, welche an gegenüberliegenden Seiten der Dichtung (1) angeordnet sind;
**dadurch gekennzeichnet, dass** der erste Abschnitt ein erstes Element (2) umfasst, welches sich um eine Achse (X) erstreckt, und dass der zweite Abschnitt ein zweites Element (3) umfasst, welches zu dem ersten Element (2) konzentrisch und verschieden ist, und welches mit dem ersten Element (2) gekoppelt werden kann, wobei das zweite Element (3) in Bezug auf das erste Element (2) axial und radial verformbar ist,
**dadurch gekennzeichnet, dass**
die Dichtung (1) ein Dichtungselement (9) umfasst, welches in Richtung der Achse (X) vorsteht, wobei das Dichtungselement (9) wenigstens teilweise deformierbar ist und im Wesentlichen zu einer äußeren spulenförmigen Nut (150) der Schraube (130) gegenförmig ist, um ein externes Koppeln mit der Schraube (130) zu beeinflussen, und um die Dichtungstrennung zu erhalten, wobei das Dichtungselement (9) stiftförmig ist und im Wesentlichen von einer zylindrischen Form ist.

2. Dichtung nach Anspruch 1, wobei das erste Element (2) einen vorzugsweise steifen äußeren Ring (2) umfasst, und wobei das zweite Element (3) einen inneren Ring (3) in einem flexiblen Material umfasst, welcher stabil mit dem äußeren Ring (2) gekoppelt werden kann und wenigstens teilweise zu einem äußeren Gewinde der Schraube gegenförmig ist, um das externe Koppeln mit der Schraube zu beeinflussen, und um die Dichtungstrennung zu erhalten.

3. Dichtung nach Anspruch 1 oder 2, wobei das erste Element (2) aus einem thermoplastischen Harz oder einem Acetal hergestellt ist, und wobei das zweite Element wenigstens teilweise aus einem Polyurethan-Elastomer hergestellt ist.

4. Dichtung nach Anspruch 1, wobei das Dichtungselement (9) durch einen Stift (9) definiert ist, welcher stabil auf den äußeren Ring (2) anwendbar ist und sich von dem inneren Ring (3) in der Richtung der Achse (X) weg erstreckt.

5. Dichtung nach Anspruch 4, wobei jeder der Ringe (2, 3) ein entsprechendes Durchgangsloch (5, 6) aufweist, welches in der radialen Richtung erhalten ist, und in welchem der Stift (9) stabil aufgenommen werden kann, wobei die Dichtung (1) stabile Kopplungsmittel (7, 8) umfasst, welche zwischen dem äußeren Ring (2) und dem inneren Ring (3) aktiv sind, um die Ringe (2, 3) stabil in einer derartigen Position gekoppelt zu halten, um die Durchgangslöcher (5, 6) gegenseitig zu überlappen, um dem Stift (9) zu erlauben, in die Durchgangslöcher (5, 6) eingesetzt zu sein.

6. Dichtung nach Anspruch 4 oder 5, wobei der innere Ring (3) eine innere Fläche (3a) aufweist, welche ausgebildet sein kann, um gegen eine äußere Fläche der Schraube (130) anzuliegen, und wobei der äußere Ring (2) einen ersten Abschnitt (11) aufweist, welcher ein Durchgangsloch (5) und einen zweiten Abschnitt (12) umfasst, welcher in Bezug auf den ersten Abschnitt (11) axial beabstandet ist.

7. Kugelumlaufspindel-Aktuator, umfassend eine Dichtung (1) nach einem der vorhergehenden Ansprüche, wobei der Aktuator einen Trageabschnitt (4), vorzugsweise eine Schraubenmutter, an welcher das erste Element (2) der Dichtung (1) stabil gesichert ist, und eine Schraube (130) aufweist, welche mit dem Trageabschnitt (4) durch einen Kugelumlaufmechanismus rotierbar verbunden ist, um einer rotatorisch-translatorischen Bewegung in Bezug auf den Trageabschnitt (4) zu folgen, wobei das zweite Element (3) mit dem äußeren spulenförmigen Gewinde der Schraube (130) durch Wechselwirken gekoppelt ist, um eine Dichtungstrennung zwischen einem ersten Raumabschnitt innerhalb des Aktuators und einem zweiten Raumabschnitt zu erhalten, welcher an der gegenüberliegenden Seite des ersten Raumabschnitts in Bezug auf die Dichtung (1) angeordnet ist.

8. Aktuator nach Anspruch 7, wobei sich das zweite Element (3) der Dichtung (1) zwischen dem Trageabschnitt (4) des Aktuators und dem äußeren spulenförmigen Gewinde der Schraube (130) erstreckt, um eine Dichtungswirkung an sowohl dem Trageabschnitt (4) als auch der Schraube (130) zu erhalten, und wobei das erste Element (2) eine radiale Erstreckung aufweist, wenn zwischen dem Trageabschnitt (4) und der Schraube (130) gemessen, welche geringer ist als das zweite Element (3).

## Revendications

1. Joint d'étanchéité pour des actionneurs de type à vis à billes, comprenant
- une première partie (2) qui peut être introduite dans une partie de support (4) de l'actionneur, de préférence un écrou,
- une deuxième partie (3, 9) qui peut être engagée sur une partie (120, 150) à filetage extérieur d'une vis (130) de l'actionneur pour définir, en coopération avec au moins ladite vis (130) et/ou ladite partie de support (4), une séparation étanche entre deux parties d'espace agencées sur des côtés opposés du joint d'étanchéité (1),
**caractérisé en ce que** la première partie comprend un premier élément (2) s'étendant autour d'un axe (X) et **en ce que** la deuxième partie comprend un deuxième élément (3) concentrique au, et distinct du premier élément (2) et qui peut être couplé au premier élément (2), le deuxième élément (3) étant axialement et radialement déformable par rapport au premier élément (2),
**caractérisé en ce que**
le joint d'étanchéité (1) comprend un élément d'étanchement (9) en saillie vers l'axe (X), l'élément d'étanchement (9) étant au moins partiellement déformable et ayant sensiblement une forme complémentaire par rapport à une rainure extérieure de forme hélicoïdale (150) de la vis (130) pour coopérer de l'extérieur de la vis (130) et pour obtenir ladite séparation étanche, l'élément d'étanchement (9) ayant la forme d'une tige et étant de forme sensiblement cylindrique.

2. Joint d'étanchéité selon la revendication 1, **caractérisé en ce que** le premier élément (2) comprend une bague extérieure (2) de préférence rigide et **en ce que** le deuxième élément (3) comprend une bague intérieure (3) en un matériau flexible, qui peut être relié de manière stable à la bague extérieure (2) et présenter au moins partiellement une forme complémentaire à un filetage extérieur de l'écrou pour coopérer de l'extérieur de la vis et pour obtenir ladite séparation étanche.

3. Joint d'étanchéité selon la revendication 1 ou 2, **caractérisé en ce que** le premier élément (2) est réalisé en une résine thermoplastique ou en une résine acétal et **en ce que** le deuxième élément est au moins partiellement réalisé en un élastomère polyuréthane.

4. Joint d'étanchéité selon la revendication 1, **caractérisé en ce que** l'élément d'étanchement (9) est défini par une tige (9) adaptée pour pouvoir être appliquée de manière stable à la bague extérieure (2) et s'étendant en s'éloignant de la bague intérieure (3) dans la direction de l'axe (X).

5. Joint d'étanchéité selon la revendication 4, **caractérisé en ce que** chacune des bagues (2, 3) comprend un trou de passage respectif (5, 6) obtenu dans la direction radiale et dans lequel la tige (9) peut être logée de manière stable, le joint d'étanchéité (1) comprenant des moyens d'accouplement stables (7, 8) actifs entre la bague extérieure (2) et la bague intérieure (3) pour maintenir les bagues (2, 3) accouplées de manière stable dans une position faisant se chevaucher les trous de passage (5, 6) pour permettre à la tige (9) d'être insérée dans les trous de passage (5, 6).

6. Joint d'étanchéité selon la revendication 4 ou 5, **caractérisé en ce que** la bague intérieure (3) comprend une surface intérieure (3a) qui peut buter contre une surface extérieure de la vis (130), et **en ce que** la bague extérieure (2) comprend une première partie (11) comportant le trou de passage (5) et une deuxième partie (12) axialement espacée par rapport à la première partie (11).

7. Actionneur à vis à billes comprenant un joint d'étanchéité selon l'une des revendications précédentes, **caractérisé en ce que** l'actionneur comprend une partie de support (4), de préférence un écrou, sur laquelle le premier élément (2) du joint d'étanchéité (1) est monté de manière stable, et une vis (130) reliée de manière rotative à la partie de support (4) par un mécanisme à recirculation de billes pour suivre un mouvement de rotation-translation par rapport à la partie de support (4), et le deuxième élément (3) étant accouplé au filetage extérieur hélicoïdal de la vis (130) par coopération pour obtenir une séparation étanche entre une première partie d'espace à l'intérieur de l'actionneur et une deuxième partie d'espace agencée sur le côté opposé à la première partie d'espace par rapport au joint d'étanchéité (1).

8. Actionneur selon la revendication 7, **caractérisé en ce que** le deuxième élément (3) du joint d'étanchéité (1) s'étend entre la partie de support (4) de l'actionneur et le filetage extérieur hélicoïdal de la vis (130) pour obtenir une action d'étanchement aussi bien sur la partie de support (4) que sur la vis (130), et **en ce que** le premier élément (2) présente une étendue radiale, mesurée entre la partie de support (4) et la vis (130), qui est inférieure au deuxième élément (3).
